# EUROPEAN PATENT APPLICATION

(11) **EP 1 515 542 A1**
(43) Date of publication of application: **16.03.2005**
(21) Application number: 03020813.6
(22) Date of filing: 12.09.2003
(51) Int. Cl.: H04N 5/00, H04N 17/04

(54) **Method to provide logging information of an application in a digital broadcast system**

(71) Applicant: Sony NetServices GmbH, 5081 Anif (AT)
(72) Inventor: Tripp, Markus, 5081 Anif (AT); Danzl, Christof, 5081 Anif (AT)
(74) Representative: Görz, Ingo

(57) **Abstract**

To provide logging information of an application that can be executed in a set-top box or another receiver for a digital broadcast system, at least a part of the logging information is displayed on top of a screen that corresponds to an output of the executed application.

## Description

The present invention relates to a method to provide logging information of an application that can be executed in a set-top box or another receiver for a digital broadcast system as well as such a set-top box that enables to provide logging information.

Digital broadcast systems applicable to the present invention are in particular ITV (Interactive TV) or DTV (Digital TV) systems (in the following just referred to as ITV), such as DVB/MHP (Digital Video Broadcast / Multimedia Home Platform) systems as e.g. specified in
[1] ETSI TS 101 812 V1.2.1 Multimedia Home Platform (MHP) Specification 1.0.2,
which is included into this specification by reference.

Generally, a MHP application, e.g. a Xlet, i.e. a Java application that is compliant to the MHP standard and can be executed on MHP set-top boxes, is displayed on a normal TV screen.

It is often necessary to test and run MHP applications (Xlets) on different set-top boxes and TV sets. Sometimes it is very difficult to identify the reason for errors and not expected application behaviour. In these situations it is very helpful to have detailed logging information available to localize the reason. In this context logging is a more or less standard programming technique to usually write status or error messages to a log file or console for further debugging and analysis. In a local test lab it is possible to send the logging output to a PC connected to the set-top box via a serial cable. But when testing an application not in a test lab environment it is impossible to get any log messages.

Therefore, it is the object underlying the present invention to provide an improved method to provide logging information of an application that can be executed in a set-top box or another receiver for a digital broadcast system, which does not show the above drawbacks, as well as a corresponding set-top box.

This object is solved by a method to provide logging information of an application that can be executed in a set-top box or another receiver for a digital broadcast system according to independent claim 1 and a set-top box according to independent claim 11. Preferred embodiments thereof are respectively defined in the respective following sub-claims. A computer program product according to the present invention is defined in claim 7, an application according to the present invention is defined in claim 9, and a computer readable storage means are defined in claims 8 and 10.

Therefore, the method to provide logging information of an application that can be executed in a set-top box or another receiver for a digital broadcast system according to the present invention comprises the step of: providing at least a part of the logging information on top of a screen that corresponds to an output of the executed application. In other words, according to the present invention said logging information is output on the normal TV screen that displays the application itself. Further, since the logging information is displayed on top of the screen that corresponds to the output of the executed application, the logging information is overlaid to the application output. However, both can be monitored by a user on the same screen.

Correspondingly, the set-top box for a digital broadcast system, which is adapted to execute an application, according to the present invention comprises a page manager unit that provides logging information input thereto on top of a screen that corresponds to an output of an executed application.

The method to provide logging information according to the present invention preferably further comprises the step of: controlling a logging behaviour based on a user input. A logging behaviour might include several possibilities of how and when to output the log information as well as the amount of log information that gets output. The user input might be provided in different ways, e.g. via codes input through a remote control and/or control panel of the set-top box executing the application, via a special remote control that is adapted to check the log information, via speech commands, ... .

Alternatively or additionally the method to provide logging information according to the present invention preferably further comprises the step of: determining whether said at least a part of the logging information should be provided on top of said screen by checking a user input reflecting whether or not a user switched-on the logging output before said at least a part of the logging information is provided on top of said screen. In this sense, the logging information might be output on top of the screen in case the user typed a certain key code, i.e. sequence of key inputs, on the remote control of the set-top box, e.g. 9-9-5. The same or another sequence might be used to switch-off the output of the logging information.

Further alternatively or additionally the method to provide logging information according to the present invention preferably further comprises the step of: determining which part of said logging information should be selected for providing said at least a part of the logging information on top of said screen by checking a user input reflecting a log level selected by a user before said at least a part of the logging information is provided on top of said screen. According to this embodiment the possibility to display certain levels of logging information is given, e.g. critical errors, all messages, output of the values of certain variables, ..., or combinations thereof, so that the user can select which information should be displayed additionally to the output of the application. Again, the user input might be provided through a certain key code on the remote control of the set-top box, e.g. 9-9-0 to decrease the code that is output and 9-9-1 to increase the code that is output.

Still further alternatively or additionally the method to provide logging information according to the present invention preferably further comprises the step of: determining which part of said logging information should be selected for providing said at least a part of the logging information on top of said screen by checking a user input reflecting an actuality of log information selected by a user before said at least a part of the logging information is provided on top of said screen. According to this embodiment the possibility to page through the logging information is given so that the user can select which information should be displayed additionally to the output of the application. Again, the user input might be provided through a certain key code on the remote control of the set-top box, e.g. 9-9-2 to perform a page-up scrolling of the code that is output and 9-9-3 to perform a page-down scrolling of the code that is output.

Therefore, the set-top box according to the present invention preferably further comprises a logging component that receives a user input and controls a log controller to perform a corresponding logging so as to provide respective logging information in respect to an application executed on said set-top box to the page manager unit.

To get the user input, the method to provide logging information according to the present invention preferably further comprises the step of: monitoring an output of a control panel or remote control of the set-top box or other receiver to determine a user input. Alternatively, an output of a special "developers logging information control device", such as an adapted mouse input device that is enabled to send special codes, could be monitored to determine a user input. In this alternative solution the advantage exists that users cannot accidentally switch into the "display logging information mode".

Therefore, the set-top box according to the present invention preferably additionally or alternatively further comprises a key server that receives a user input in form of key codes and provides selected key codes thereof to a logging component.

A computer program product according to the present invention comprises computer program means adapted to perform the method steps as set-out above when being executed on a computer, digital signal processor or the like. An application according to the present invention is adapted to perform the method steps as set-out above when being executed on a computer, digital signal processor or the like. A computer readable storage means according to the present invention stores thereon a computer program product and/or an application as set-out above.

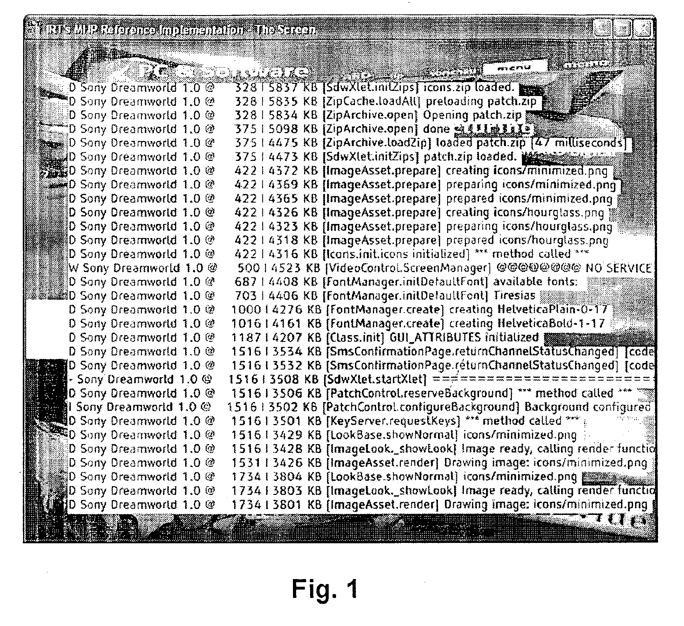

Therefore, according to the present invention a small framework might be created that allows the tester to display the logging output of Xlets, e.g. on a white transparent box on top of the screen, as is indicated in figure 1. The logging framework might have the following behaviour:
- Logging can be controlled with key codes from the remote control, which means if the user or tester presses a defined sequence (key code) on his remote control he/she can control the logging behaviour. The key codes used can be configured individually for each application. The following functions might be supported:
   o Switch on/off the logging in the foreground (e.g. code: 9-9-5).
   o Increase/decrease log level from debug to error (error means that only critical error messages are displayed. e.g. decrease code: 9-9-0, increase code: 9-9-1).
   o Paging through the last error messages (page up and down. e.g. page up code: 9-9-2, page down code: 9-9-3).
   o The key codes consist of a free selectable prefix (e.g. 9-9) and a number that specifies the action (e.g. 5 for switch on/off).
- Even when logging is enabled the application still works and the logging output can be seen on the front. This is helpful to localize an error.

For a better understanding of the invention and to further elucidate the invention, its features, objects and advantages, exemplary preferred embodiments thereof are described in detail by way of example while making reference to the accompanying drawing, wherein:
- **Fig. 1**: shows an example of a switched on logging provided on top of the screen of an application,
- **Fig. 2**: shows a flow chart of a framework according to a preferred embodiment of the present invention that controls the logging behaviour, and
- **Fig. 3**: shows a block diagram of a set-top box according to a preferred embodiment of the present invention.

Figure 1 shows an example of a switched on logging provided on top of the screen of an application. It can be seen that the application is executed in the background of the logging output and the logging output is provided on a white transparent underground, which enables an easier reading of the information provided and also allows observing the application that is executed underneath.

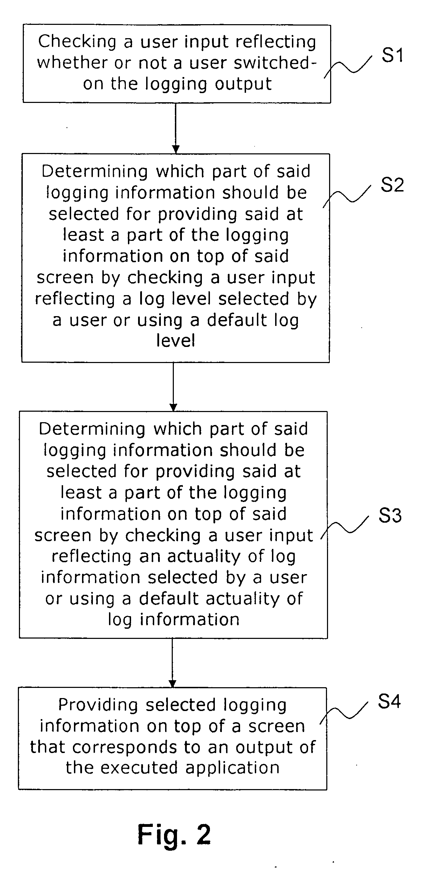

Figure 2 shows' a flow chart of a framework according to a preferred embodiment of the present invention that controls the logging behaviour. A framework means a collection of bibliography files that provide object classes to be used by an application that supports the logging output according to the present invention.

In a first step S1 it is checked if a user input reflects whether the logging output was switched-on. If this is the case a second step S2 is performed in which it is determined which part of said logging information should be selected for providing said at least a part of the logging information on top of said screen by checking a user input reflecting a log level selected by a user or using a default log level. Thereafter, in a following step S3 it is determined which part of said logging information should be selected for providing said at least a part of the logging information on top of said screen by checking a user input reflecting an actuality of log information selected by a user or using a default actuality of log information, before in a final step S4 said selected logging information is provided on top of a screen that corresponds to an output of the executed application.

As indicated above, the user input might be provided by monitoring an output of a control panel or remote control of the set-top box or other receiver, or an output of a special "developers logging information control device" could be monitored.

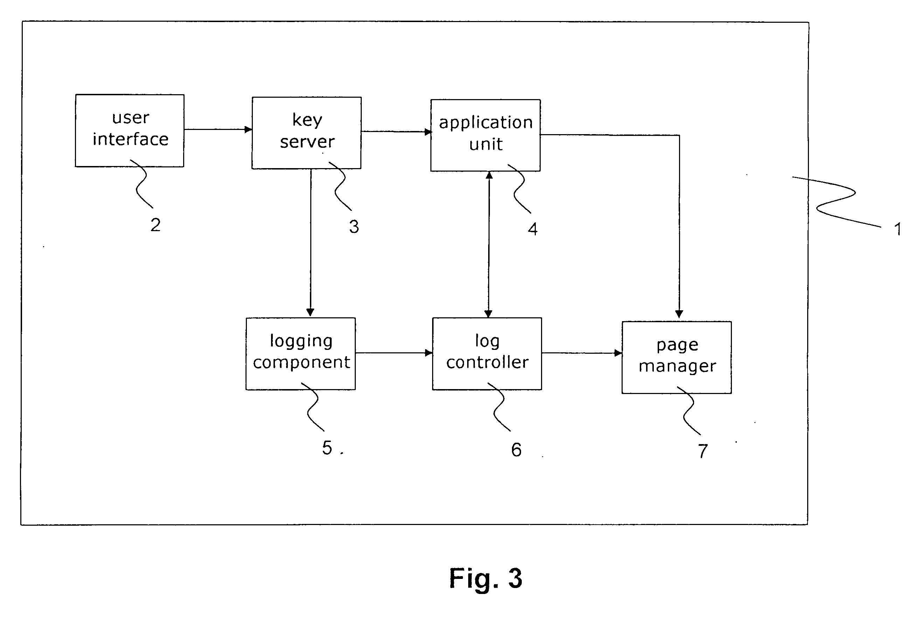

Figure 3 shows an embodiment of a set-top box according to the present invention. Only the parts relevant to the invention are shown within the set-top box 1. The shown set-top box 1 comprises a user interface 2, a key server 3, an application unit 4, a logging component 5, a log controller 6, and a page manager unit 7.

The user interface, e.g. a control panel or remote control of the set-top box 1, receives all user inputs and supplies all corresponding key events to the key server 3. The key server 3 delegates these key events to different units in the set-top box 1, e.g. to switch on/off the set-top box 1, to provide an input to an application, ... . In the shown preferred embodiment of the set-top box 1 according to the present invention, the key server 3 supplies selected key events, e.g. all those having a predetermined prefix, e.g. 9-9, to the logging component 5 and all 'normal application key events', i.e. key events that are intended to be received by an application executed in the set-top box 1, to the application unit 4, which is responsible for executing the applications within the set-top box 1. In other words, the key server 3 is responsible to delegate key events to the different application components and as well as to the logging component 5. The log controller 6, which is connected to the logging component 5 and receives instructions from this unit, is responsible to perform the corresponding action, e.g. switch on/off logging, increasing/decreasing log level, page up/down. To be able to perform the corresponding actions, the log controller 6 is bidirectional connected with the application unit 4. The application unit 4 and the log controller 6 provide any outputs that should be displayed on a screen of a TV set connected to the set-top box to the page manager 7. The page manager 7 is responsible to update the view, and takes care that the logging layer is drawn transparently on top of the application screen.

Alternatively to the embodiment shown in Figure 3, the whole logging components according to the present invention might be provided as an application framework that is implemented and executed in the application unit 4. Therefore, it might be necessary that first the logging component registers itself to the key server 3 and requests to receive key events after a specific prefix (e.g. 9-9) is pressed on the remote control. The logging itself and the output of the logging information is then performed comparable to the case described above.

Further, it is not necessary to use the key server 3 and the page manager 7 to enable the logging, but the MHP application itself must then provide a key component that delegates key events to the logging framework and a view component that renders the view. This might be implemented in the standard way using a MVC (model-view-controller) design pattern.

## Claims

1. Method to provide logging information of an application that can be executed in a set-top box or another receiver for a digital broadcast system, **characterized by** the step of:
- providing at least a part of the logging information on top of a screen that corresponds to an output of the executed application.

2. Method to provide logging information according to claim 1, **characterized by** the step of:
- controlling a logging behaviour based on a user input.

3. Method to provide logging information according to claim 1 or 2, **characterized by** the step of:
- determining whether said at least a part of the logging information should be provided on top of said screen by checking a user input reflecting whether or not a user switched-on the logging output before said at least a part of the logging information is provided on top of said screen.

4. Method to provide logging information according to anyone of claims 1 to 3, **characterized by** the step of:
- determining which part of said logging information should be selected for providing said at least a part of the logging information on top of said screen by checking a user input reflecting a log level selected by a user before said at least a part of the logging information is provided on top of said screen.

5. Method to provide logging information according to anyone of claims 1 to 4, **characterized by** the step of:
- determining which part of said logging information should be selected for providing said at least a part of the logging information on top of said screen by checking a user input reflecting an actuality of log information selected by a user before said at least a part of the logging information is provided on top of said screen.

6. Method to provide logging information according to anyone of claims 2 to 5, **characterized by** the step of:
- monitoring an output of a control panel or remote control of the set-top box or other receiver to determine a user input.

7. Computer program product, comprising computer program means adapted to perform the method steps as defined in anyone of claims 1 to 6 when being executed on a computer, digital signal processor or the like.

8. Computer readable storage means, storing thereon a computer program product according to claim 7.

9. Application for a set-top box or another receiver for a digital broadcast system, **characterized in that**
- it is adapted to perform the method steps as defined in anyone of claims 1 to 6 when being executed on a computer, digital signal processor or the like.

10. Computer readable storage means, storing thereon an application according to claim 9.

11. Set-top box for a digital broadcast system, which is adapted to execute an application, **characterized by**
- a page manager unit that provides logging information input thereto on top of a screen that corresponds to an output of an executed application.

12. Set-top box according to claim 11, **characterized by**
- a key server that receives a user input in form of key codes and provides selected key codes thereof to a logging component.

13. Set-top box according to claim 11 or 12, **characterized by**
- a logging component that receives a user input and controls a log controller to perform a corresponding logging so as to provide respective logging information in respect to an application executed on said set-top box to the page manager unit.
